(19) Europäisches Patentamt
European Patent Office
Office européen des brevets

(11) EP 0 771 062 A1

(12) DEMANDE DE BREVET EUROPEEN

(43) Date de publication:
02.05.1997 Bulletin 1997/18

(51) Int Cl.6: H02M 1/12

(21) Numéro de dépôt: 96402258.6

(22) Date de dépôt: 24.10.1996

(84) Etats contractants désignés:
BE DE ES FR IT PT

(30) Priorité: 24.10.1995 FR 9512499

(71) Demandeur: Nouvelle Société Satel
71530 Chalon sur Saône (FR)

(72) Inventeurs:
• Forest,Francois
34980 St Clement de Rivière (FR)
• Delbosc,Serge
75009 Paris (FR)

(74) Mandataire: Pontet, Bernard
Pontet & Allano s.e.l.a.r.l.
25, rue Jean Rostand
Parc-Club Orsay-Université
91893 Orsay Cédex (FR)

(54) **Dispositif de conversion alternatif-continu à absorption sinusoidale de courant, et procédé mis en oeuvre dans celui-ci**

(57) Dispositif (1) de conversion alternatif-continu à absorption sinusoïdale de courant, comprenant un étage de conversion alternatif-continu (2), un étage de filtrage (3) et un étage de conversion continu-continu.

L'étage de conversion continu-continu comprend un convertisseur Flyback (4) générant une tension continue régulée comportant une ondulation de tension résiduelle et, en aval de celui-ci, un convertisseur auxiliaire (5) agencé pour générer une tension (Vs2) compensant cette ondulation de tension résiduelle en sortie du convertisseur Flyback (4).

Utilisation en électronique de puissance, notamment pour des applications en télécommunication.

FIG.1

EP 0 771 062 A1

## Description

La présente invention concerne un dispositif de conversion alternatif-continu à absorption sinusoïdale de courant. Elle vise également un procédé mis en oeuvre dans ce dispositif.

On attend d'un dispositif de conversion alternatif-continu qu'il prélève sur le réseau un courant lui-même sinusoïdal, qu'il fournisse une tension de sortie parfaitement régulée au sens où cette tension régulée ne présente plus de tension résiduelle à basse fréquence, - en particulier la fréquence du réseau -, et qu'il soit isolé galvaniquement.

Les dispositifs classiques utilisés actuellement sont constitués de deux étages en cascade, chaque étage étant dimensionné pour la puissance nominale à convertir, comme l'illustre par exemple l'article "Higher power factor for switched-mode power supplies" de la revue SIEMENS COMPONENTS, vol.28, No.3, Juillet 1993, pages 10-14. Le rendement énergétique global de ces dispositifs est modeste puisqu'il est le produit des rendements respectifs de chaque étage.

On connaît par ailleurs, par le US-A-4 642 745, un circuit de conversion alternatif-continu à absorption sinusoïdale incluant une compensation de l'ondulation de tension résiduelle mettant en oeuvre un transformateur unique et une technique de résonance entre un enroulement secondaire auxiliaire et un condensateur de résonance, cet enroulement secondaire auxiliaire étant faiblement couplé à un enroulement primaire relié à un étage de commande MLI. L'enroulement secondaire auxiliaire et le condensateur de résonance agissent en quelque sorte comme un générateur de tension réglable pour compenser l'ondulation de tension résiduelle normalement constatée en sortie d'un convertisseur continu-continu. La tension de sortie de ce circuit est fournie en sortie d'un étage de redressement et de filtrage connecté à un enroulement secondaire de sortie du transformateur.

Le but de la présente invention est de proposer un dispositif de conversion alternatif-continu de rendement plus élevé que les dispositifs de conversion actuels, et qui en outre mette en oeuvre moins de composants et soit moins coûteux.

Il s'agit d'un dispositif de conversion alternatif-continu à absorption sinusoïdale de courant, pour délivrer à une charge une tension de sortie continue régulée à partir d'une source de tension alternative, comprenant un étage de conversion alternatif-continu, un étage de filtrage et un étage de conversion continu-continu incluant un convertisseur continu-continu à absorption sinusoïdale et à isolement galvanique comprenant des premiers moyens de commutation commandés et délivrant une tension régulée comportant une ondulation de tension résiduelle à basse fréquence.

Suivant l'invention, l'étage de conversion continu-continu comprend en outre, en aval du convertisseur continu-continu à absorption sinusoïdale, un convertisseur auxiliaire de type continu-continu agencé pour générer une tension compensant l'ondulation de tension résiduelle en sortie du convertisseur continu-continu.

Ainsi, en associant à un étage de conversion continu-continu isolé, par exemple un convertisseur Flyback, un convertisseur auxiliaire de puissance nécessairement réduite puisque ne délivrant qu'une tension d'amplitude modeste par rapport à la tension nominale, on bénéficie à la fois d'une absorption sinusoïdale et d'une compensation de l'ondulation de tension à basse fréquence présente en sortie de l'étage de conversion continu-continu.

Dans un premier mode préféré de réalisation de l'invention, le dispositif de conversion alternatif-continu comprend en outre des moyens pour compenser le courant de sortie du convertisseur continu-continu comprenant des premiers moyens de commutation commandés, face à des variations de charge, ces moyens de compensation agissant sur la commande des premiers moyens de commutation commandés. Cette fonctionnalité permet de rendre l'étage de conversion continu-continu peu sensible aux variations de charge et ainsi de minimiser la puissance instantanée dimensionnante pour l'étage de sortie.

Dans une forme pratique de réalisation, le convertisseur auxiliaire comprend des seconds moyens de commutation commandés, un transformateur comprenant un enroulement primaire en série avec lesdits moyens de commutation commandés et un enroulement secondaire coopérant avec des moyens de redressement pour délivrer la tension de compensation, cet enroulement secondaire étant disposé en série avec la sortie du convertisseur continu-continu. On peut notamment choisir pour ce convertisseur auxiliaire une structure Forward.

Ce convertisseur auxiliaire, que l'on peut considérer comme un filtre actif régulant la tension de sortie, peut être dimensionné pour une puissance qui ne représente qu'une fraction de la puissance nominale du dispositif de conversion alternatif-continu. Il est également prévu des moyens pour réguler sa tension de sortie, ces moyens de régulation agissant sur le rapport cyclique de commande des seconds moyens de commutation commandés.

Le convertisseur continu-continu est de préférence un convertisseur Flyback qui, de par sa structure, réalise la condition d'isolement galvanique.

Suivant un autre aspect de l'invention, il est proposé un procédé de conversion alternatif-continu, pour délivrer une tension continue à partir d'une source d'alimentation alternative, mis en oeuvre dans le dispositif selon l'invention, ce procédé comprenant les étapes suivantes

- un redressement alternatif-continu, pour délivrer à partir de la source de tension alternative une tension redressée non régulée, et
- un filtrage en aval du redressement alternatif-continu.

Suivant l'invention, le procédé comprend en outre, à la suite du filtrage, une étape de conversion continu-continu à absorption sinusoïdale et à isolement galvanique pour délivrer une tension continue régulée comportant une ondulation de tension résiduelle à basse fréquence, et une étape pour compenser l'ondulation à basse fréquence de cette tension continue régulée, cette étape de compensation comprenant une génération d'une tension de compensation de fréquence et d'amplitude sensiblement égales à celles de l'ondulation de tension à basse fréquence, et une mise en série de cette tension de compensation avec la tension de sortie issue de la conversion continu-continu.

Selon un mode préféré de mise en oeuvre du procédé selon l'invention, la conversion continu-continu est une conversion en mode Flyback.

Dans une forme pratique de réalisation de l'invention, la tension de compensation est délivrée aux bornes d'un enroulement secondaire d'un convertisseur auxiliaire en mode Forward, cet enroulement secondaire étant disposé en série avec la sortie de l'étage de conversion continu-continu.

Le procédé selon l'invention comprend de préférence une compensation du courant de sortie de l'étage de conversion continu-continu, cette compensation comportant une addition à la tension de commande de cet étage de conversion continu-continu d'une image du courant de sortie.

D'autres particularités et avantages de l'invention apparaîtront encore dans la description ci-après. Aux dessins annexés donnés à titre d'exemples non limitatifs :

- la figure 1 est un schéma général d'un dispositif de conversion alternatif-continu;
- la figure 2 est un schéma du convertisseur continu-continu Flyback;
- la figure 3 est un schéma-bloc de la boucle de régulation du convertisseur continu-continu Flyback; et
- la figure 4 est un chronogramme des tensions de sortie respectives du convertisseur Flyback et du convertisseur auxiliaire.

On va maintenant décrire un exemple particulier de réalisation d'un dispositif de conversion alternatif-continu selon l'invention, en même temps que le procédé d'alimentation mis en oeuvre dans ce dispositif, en référence aux figures précitées.

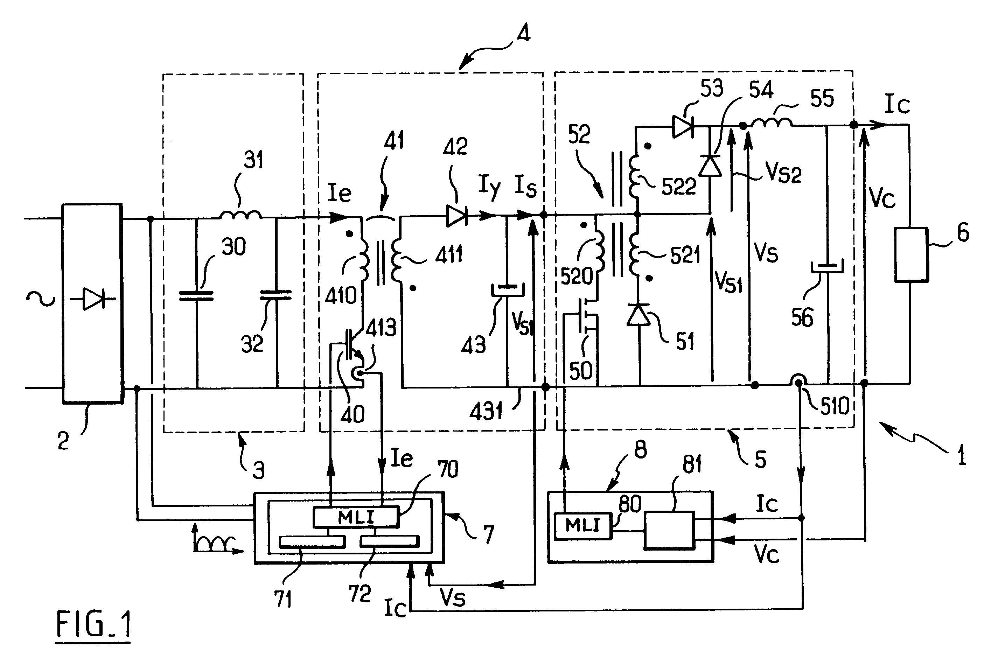

Le dispositif de conversion alternatif-continu 1 comprend, en référence à la figure 1, un étage de redressement à diodes 2 alimenté sous une tension alternative monophasée, par exemple le secteur monophasé, un étage de filtrage 3, un étage de conversion continu-continu 4 comprenant un convertisseur Flyback, et un convertisseur auxiliaire 5 à la sortie duquel est connectée une charge 6.

L'étage de filtrage 3 comporte un condensateur d'entrée 30 (1,8 μF), une inductance de filtrage 31 en ligne (150 μH) et un condensateur de sortie 32 (1,8 μF). Cet étage de filtrage 3 a été dimensionné de façon à minimiser l'inductance de filtrage 31 et de rendre l'ondulation de tension aux bornes du condensateur de sortie 32, et donc à l'entrée du convertisseur Flyback 4, indépendante de l'inductance de la ligne d'alimentation.

Le convertisseur Flyback 4 comprend un interrupteur commandé 40, de préférence un IGBT (Insulated Gate Bipolar Transistor), un circuit d'aide à la commutation 400, une inductance couplée 41 comportant un enroulement primaire 410 en série avec l'interrupteur 40 et un enroulement secondaire 411 en série avec une diode secondaire 42, et une condensateur de sortie 43.

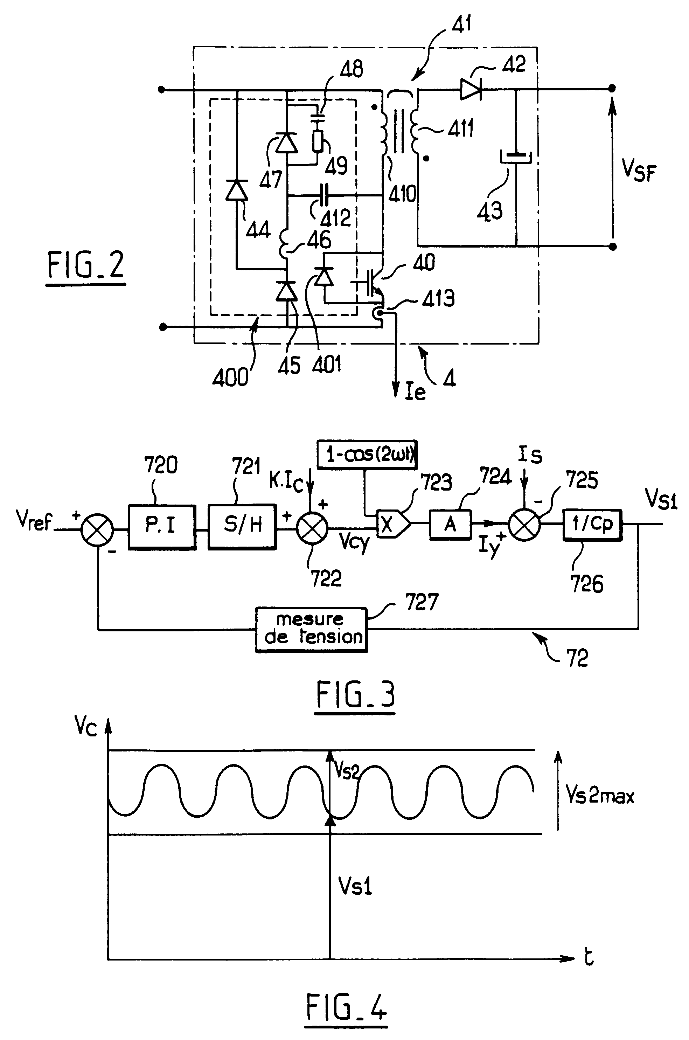

Dans un exemple pratique de réalisation du convertisseur Flyback 4 (figure 2), l'interrupteur commandé 40 est un IGBT rapide 50 A, 1200 V et sa fréquence de découpage est égale à 20 kHz. Cet interrupteur commandé 40 est nécessairement pourvu d'une diode 401 montée en antiparallèle. L'inductance couplée 41 est de structure toroïdale avec un noyau en ferrite et des conducteurs en fil de Litz. La diode secondaire 42 est de préférence une diode ultra rapide 100 A, 200 V; Le condensateur de sortie 43 est un condensateur chimique à hautes performances ayant une capacité de 15000 μF.

Le circuit d'aide à la commutation 400, de structure connue, permet de limiter les contraintes instantanées et les pertes liées à la commutation d'ouverture de l'interrupteur commandé 40. Il comprend notamment un condensateur 412 d'aide à l'ouverture pour récupérer l'énergie de fuite de l'inductance couplée 41, une inductance 46 permettant une inversion de la tension aux bornes du condensateur 412, trois diodes 45, 44, 47, et un circuit (R, C) 49, 48, ces composants d'aide à la commutation étant connectés suivant un schéma bien connu des concepteurs de circuit d'aide à la commutation.

Dans l'exemple pratique de réalisation qui vient d'être décrit pour le convertisseur continu-continu Flyback 4, on a obtenu une puissance de sortie utile de 1500 W avec un rendement de 92 %.

L'interrupteur 40 est commandé par une unité de commande 7 comprenant un module de commande à Modulation de Largeur d'Impulsion (MLI) 70 comportant un module de protection en courant à partir d'une information de mesure de courant fournie par un capteur de courant 413, - par exemple une sonde passive -, en série avec l'interrupteur 40, un module d'isolement galvanique et un module de commande rapprochée. Lorsque le courant dans l'interrupteur 40 dépasse une consigne de courant maximum, le module de protection assure un blocage de la commande de grille de l'interrupteur 40 jusqu'à la période de découpage suivante.

Un module 71 de régulation du courant d'entrée le du convertisseur continu-continu Forward 4 est prévu pour permettre de contrôler la puissance absorbée et de maintenir ou au mieux d'améliorer les performances d'absorption sinusoïdale. Il s'agit ainsi de réaliser un asservissement rapide avec une erreur faible sur une large gamme de fréquence, tout en offrant un degré de stabilité satisfaisant.

Le courant d'entrée le est mesuré par la sonde passive 413 qui ne fournit cependant que la composante dynamique du courant. Pour obtenir une image du courant d'entrée, on reconstitue la composante continue de courant suivant une technique bien connue mettant en oeuvre un filtre RC ou une intégration, en utilisant le fait que, dans ce type de convertisseur Flyback, le courant mesuré s'annule périodiquement à des instants connus. Il n'est pas nécessaire de décrire en détail la boucle de courant mise en oeuvre pour la régulation du courant d'entrée, cette boucle de courant pouvant être réalisée selon des schémas classiques connus de tout homme du métier.

Il est par ailleurs avantageux de prévoir une régulation 72 de la tension de sortie Vs du convertisseur Flyback 4, en référence aux figures 2 et 3. On montre que cette régulation peut être obtenue en réalisant une compensation du courant de sortie Is. Il convient cependant de ne pas réinjecter dans la boucle de régulation l'ondulation de tension à une fréquence de 100 Hz issue du redressement monophasé, afin de ne pas déformer la consigne de la boucle interne de courant. Cette composante est éliminée en introduisant un échantillonneur-bloqueur 721 synchronisé sur l'ondulation de tension.

On réalise une mesure (727) de la tension Vs en sortie du convertisseur Flyback 4. Cette mesure est comparée à une tension de référence Vref et la différence de tension est soumise à un correcteur P.I (Proportionnel Intégral), puis à l'échantillonneur-bloqueur 721. On obtient ainsi un signal de commande auquel on ajoute (722) une image K.Ic du courant de sortie Ic du convertisseur 1, cette image étant obtenue par mesure de ce courant au moyen d'une sonde de mesure de courant 510 disposée en sortie du convertisseur auxiliaire 5. Cette addition permet une compensation rapide des variations de courant et ainsi une réduction considérable des écarts de tension lors de variations rapides de charge. Le convertisseur Flyback 4 peut être modélisé par un générateur de courant commandé. Les éléments caractéristiques du modèle sont:

- une modulation de la tension de commande Vcy par une fonction (1-cos(2ω)t) représentative de l'ondulation à 100 Hz de la tension redressée, si ω est la pulsation électrique du secteur,
- et une génération (724) d'un courant ly ayant pour expression:

$$ly = A. Vcy.(1-cos(2\omega)t)$$

La tension de sortie du convertisseur Flyback 4 est obtenue par intégration capacitive 1/Cp du courant circulant dans le condensateur 43 qui est égal à la différence entre le courant généré ly et le courant de sortie Is appelé par le convertisseur auxiliaire 5.

Avec un réglage approprié de cette compensation de courant, les variations de courant de charge ne se manifestent plus que sur l'amplitude des ondulations à 100 Hz du courant délivré par le convertisseur Flyback 4. Dans le cas le plus défavorable d'un échelon de courant, l'amplitude des variations de tension qui en résulte dépend de l'instant d'application et de l'amplitude de cet échelon. La variation maximale de tension que l'on peut obtenir est égale au double de l'ondulation maximale. Cette compensation permet d'obtenir un gain considérable sur le dimensionnement en puissance du convertisseur Forward 5 qui joue alors le rôle de filtre actif.

Le convertisseur auxiliaire 5, qui a pour fonction d'atténuer l'ondulation à basse fréquence de la tension de sortie du convertisseur Flyback 4, est de type Forward. Il comprend un transformateur 52 comportant un enroulement primaire 520 en série avec un interrupteur commandé 50, un premier enroulement secondaire 522 en série avec une diode secondaire 53 pour délivrer une tension de compensation Vs2, et un second enroulement secondaire 521 de récupération en série avec une diode de récupération 51. L'enroulement primaire 520 et l'interrupteur commandé en série sont connectés en parallèle sur la sortie du convertisseur Flyback 4. L'enroulement de récupération 521 et la diode de récupération 51 sont également connectés en parallèle sue la sortie du convertisseur Flyback 4, puisqu'il n'est pas nécessaire de prévoir d'isolement galvanique pour cet étage de compensation. Une diode de roue libre 54 est connectée en parallèle sur l'enroulement secondaire 522 en série avec la diode secondaire 53. La tension de sortie Vs du convertisseur auxiliaire est alors égale à la somme de la tension de sortie Vs1 du convertisseur Flyback 4 et de la tension de compensation Vs2 aux bornes de la diode de roue libre 54. Cette tension de sortie Vs est filtrée par un filtre passif classique comprenant une inductance en ligne 55 et un condensateur électrochimique 56 en parallèle sur la sortie de charge. On obtient en particulier le filtrage des composantes du découpage à 20 kHz du convertisseur Flyback 4.

A titre d'exemple pratique de cahier des charges pour la réalisation du convertisseur auxiliaire 5 selon l'invention, celui ci doit présenter les caractéristiques suivantes:

- une annulation de l'erreur statique sur la tension de sortie Vc,
- une atténuation de l'ondulation de tension du convertisseur Flyback 4 de 30 dB,
- une atténuation des effets de variation de charge, soit Vc/lc inférieur à -30 dB à une fréquence de 10 kHz.

L'interrupteur commandé 50 du convertisseur auxiliaire 5 est de préférence un transistor MOSFET, du fait que les courants commutés sont très inférieurs au courant nominal du dispositif de conversion 1. Ce transistor est piloté par une unité de commande 8 incluant une commande de type MLI et une régulation de la tension de sortie. Cette régulation peut être effectué suivant des techniques classiques dans le domaine de l'électronique de puissance. Il s'agit ici de générer une tension de compensation Vs2 à une fréquence de 100 Hz qui soit telle qu'elle vienne compenser les propres ondulations à 100 Hz de la tension Vs1 de sortie du convertisseur Flyback (figure 4), et que la tension de sortie du dispositif de conversion alternatif-continu selon l'invention soit une tension sensiblement constante de valeur prédéterminée Vc. Pour dimensionner le convertisseur auxiliaire 5, il est nécessaire de déterminer la variation maximale $V_{s2max}$ de la tension de compensation Vs2, et par conséquent la variation maximale de la tension de sortie Vs1 du convertisseur Flyback. En pratique, du fait de l'existence d'une compensation du courant de sortie du convertisseur Flyback 4, cette variation de la tension de sortie Vs1 reste limitée au double de la valeur crête-crête de l'ondulation à 100 Hz au point nominal, soit environ 10 V pour une alimentation secteur de 300 V.

Bien sûr, l'invention n'est pas limitée aux exemples qui viennent d'être décrits et de nombreux aménagements peuvent être apportés à ces exemples sans sortir du cadre de l'invention. Ainsi, les interrupteurs commandés équipant le convertisseur Flyback et le convertisseur Forward peuvent être choisis différemment que ceux cités dans la description, en fonction de contraintes matérielles ou économiques. Par ailleurs, les unités de commande peuvent être conçues suivant d'autres principes de commande sans limiter pour autant la portée de l'invention.

## Revendications

1. Dispositif (1) de conversion alternatif-continu à absorption sinusoïdale de courant, pour délivrer à une charge (6) une tension de sortie (Vc) continue régulée à partir d'une source de tension alternative, comprenant un étage de conversion alternatif-continu (2), un étage de filtrage (3) et un étage de conversion continu-continu incluant un convertisseur continu-continu (4) à absorption sinusoïdale et à isolement galvanique comprenant des premiers moyens de commutation commandés et délivrant une tension régulée comportant une ondulation de tension résiduelle à basse fréquence, caractérisé en ce que l'étage de conversion continu-continu comprend en outre, en aval du convertisseur continu-continu (4) à absorption sinusoïdale, un convertisseur auxiliaire (5) de type continu-continu agencé pour générer une tension (Vs2) compensant l'ondulation de tension résiduelle en sortie du convertisseur continu-continu (4).

2. Dispositif (1) selon la revendication 1, caractérisé en ce qu'il comprend en outre des moyens (72) pour compenser face à des variations de charge le courant de sortie (Is) du convertisseur continu-continu (4), ces moyens de compensation (72) agissant sur la commande des premiers moyens de commutation commandés (40) dudit convertisseur continu-continu (4).

3. Dispositif (1) selon l'une quelconque des revendications 1 ou 2, caractérisé en ce que le convertisseur auxiliaire (5) comprend des seconds moyens de commutation commandés (50), un transformateur (52) comprenant un enroulement primaire (520) en série avec lesdits seconds moyens de commutation commandés (50), et un enroulement secondaire (522) coopérant avec des moyens de redressement (53) pour délivrer la tension de compensation (Vs2), cet enroulement secondaire (522) étant disposé en série avec la sortie du convertisseur continu-continu (4).

4. Dispositif (1) selon la revendication 3, caractérisé en ce que le convertisseur auxiliaire (5) est un convertisseur Forward.

5. Dispositif (1) selon la revendication 4, caractérisé en ce qu'il comprend en outre des moyens (8) pour réguler sa tension de sortie (Vc), ces moyens de régulation agissant sur la commande des seconds moyens de commutation commandés (50) du convertisseur auxiliaire (5).

6. Dispositif (1) selon quelconque des revendications précédentes, caractérisé en ce que le convertisseur continu-continu (4) est un convertisseur Flyback.

7. Procédé de conversion alternatif-continu, pour délivrer une tension continue régulée (Vc) à partir d'une source de tension alternative, mis en oeuvre dans le dispositif (1) selon l'une des revendications précédentes, comprenant les étapes suivantes

   - un redressement alternatif-continu, pour délivrer à partir de la source de tension alternative une tension redressée non régulée, et
   - un filtrage en aval du redressement alternatif-continu,

   caractérisé en ce qu'il comprend en outre une conversion continu-continu à absorption sinusoïdale et à isolement galvanique pour délivrer une tension continue régulée (Vc) comportant une ondulation de tension résiduelle à basse fréquence, et une compensation de l'ondulation à basse fréquence de cette tension continue régulée, cette étape de compensation comprenant une génération d'une tension de compensation (Vs2) de fréquence et d'amplitude sensiblement égales à celles de l'ondulation de tension à basse fréquence et une mise en série de cette tension de compensation (Vs2) avec la tension de sortie (Vs1) issue de la conversion continu-continu.

**8.** Procédé selon la revendication 7, caractérisé en ce que la conversion continu-continu est une conversion de type Flyback.

**9.** Procédé selon l'une des revendications 7 ou 8, caractérisé en ce qu'il comprend en outre une compensation du courant de sortie (Is) de l'étage de conversion continu-continu.

**10.** Procédé selon l'une des revendications 7 à 9, caractérisé en ce que la tension de compensation (Vs2) est délivrée aux bornes d'un enroulement secondaire (522) d'un convertisseur auxiliaire Forward (5), cet enroulement secondaire (522) étant disposé en série avec la sortie de l'étage de conversion continu-continu.

**11.** Procédé selon la revendication 10, caractérisé en ce qu'il comprend en outre une régulation de la tension de sortie (Vc) du dispositif de conversion alternatif-continu (1), cette régulation comprenant une génération d'un signal de commande de rapport cyclique variable pour le convertisseur auxiliaire Forward (5).

FIG.1

EP 0 771 062 A1

FIG.2

FIG.3

FIG.4

| | Office européen<br>des brevets | **RAPPORT DE RECHERCHE EUROPEENNE** | Numero de la demande<br>EP 96 40 2258 |

## DOCUMENTS CONSIDERES COMME PERTINENTS

| Catégorie | Citation du document avec indication, en cas de besoin,<br>des parties pertinentes | Revendication<br>concernée | CLASSEMENT DE LA<br>DEMANDE (Int.Cl.6) |
|---|---|---|---|
| A | EP 0 658 968 A (NIHON PROTECTOR CO LTD) 21<br>Juin 1995<br>* le document en entier *<br>--- | 1-11 | H02M1/12 |
| A | US 4 642 745 A (STEIGERWALD ROBERT L ET<br>AL) 10 Février 1987<br>* figures 1,3 *<br>--- | 1-11 | |
| A | EP 0 632 571 A (FIAR FABBRICA ITALIANA<br>APPAREC) 4 Janvier 1995<br>* figure 3 *<br>--- | 1,3 | |
| A | SIEMENS COMPONENTS,<br>vol. 28, no. 3, 1 Juillet 1993,<br>pages 10-14, XP000384942<br>SCHOTT W: "HIGHER POWER FACTOR FOR<br>SWITCHED-MODE POWER SUPPLIES"<br>* figures 1-3 *<br>----- | 1 | |
| | | | **DOMAINES TECHNIQUES<br>RECHERCHES (Int.Cl.6)**<br><br>H02M |

Le présent rapport a été établi pour toutes les revendications

| Lieu de la recherche | Date d'achèvement de la recherche | Examinateur |
|---|---|---|
| LA HAYE | 23 Janvier 1997 | Gentili, L |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................
& : membre de la même famille, document correspondant

EPO FORM 1503 03.82 (P04C02)